# EUROPEAN PATENT APPLICATION

(11) **EP 2 928 143 A1**
(43) Date of publication of application: **07.10.2015**
(21) Application number: 13887020.9
(22) Date of filing: 06.11.2013
(51) Int. Cl.: H04L 29/06

(54) **PAGE OPERATION PROCESSING METHOD, DEVICE AND TERMINAL**

(71) Applicant: Huawei Device Co., Ltd., Shenzhen, Guangdong 518129 (CN)
(72) Inventor: LI, Yan, Shenzhen Guangdong 518129 (CN); GAO, Wenmei, Shenzhen Guangdong 518129 (CN)
(74) Representative: Lord, Michael
(86) International application number: PCT/CN2013/086620
(87) International publication number: WO 2015/066860

(57) **Abstract**

Embodiments of the present invention provide a page operation processing method and apparatus, and a terminal. The method includes: acquiring, by a terminal device, a uniform resource locator URL corresponding to a to-be-accessed resource; detecting, by the terminal device, whether a stored domain name includes a domain name corresponding to the URL; and if the stored domain name includes the domain name corresponding to the URL, triggering, by the terminal device, an application client corresponding to the domain name of the URL to acquire and display an application client page corresponding to the URL. The page operation processing method and apparatus, and the terminal provided in the embodiments of the present invention can reduce consumption of network traffic and facilitate user operations and page browsing, thereby improving user experience.

## Description

### TECHNICAL FIELD

Embodiments of the present invention relate to communications technologies, and in particular, to a page operation processing method and apparatus, and a terminal.

### BACKGROUND

With continuous development of various applications on a terminal device, people gradually get used to performing function operations, such as instant message communication, surfing on the Internet, and shopping, by using a terminal device.

In the prior art, when a user clicks a web page link on a terminal device, the terminal device may recognize that content clicked by the user is a uniform resource locator (Uniform Resource Locator, URL for short) and then the terminal device may present to the user a window that includes all browsers installed on the terminal device. The user can select one browser in the window presented by the terminal device to access the web page link.

However, using a browser to access the web page link easily leads to consumption of a large amount of network traffic. In addition, a size of displayed content is relatively small when the page is displayed by using a browser, because a screen of the terminal device is smaller than that of a common computer. As a result, it is inconvenient for user operations and browsing.

### SUMMARY

Embodiments of the present invention provide a page operation processing method and apparatus, and a terminal, so as to solve the following problems in the prior art: A large amount of network traffic is consumed when a web page link is accessed on a terminal device by using a browser and it is inconvenient for user operations and browsing because a size of displayed content is relatively small when the page is displayed by using a browser. Therefore, user experience is improved.

According to a first aspect, an embodiment of the present invention provides a page operation processing method, including:
acquiring, by a terminal device, a uniform resource locator URL corresponding to a to-be-accessed resource;
detecting, by the terminal device, whether a stored domain name includes a domain name corresponding to the URL; and
if the stored domain name includes the domain name corresponding to the URL, triggering, by the terminal device, an application client corresponding to the domain name of the URL to acquire and display an application client page corresponding to the URL.

With reference to the first aspect, in a first possible implementation manner of the first aspect, the acquiring, by a terminal device, a URL corresponding to a to-be-accessed resource includes:
acquiring, by the terminal device, the URL that is corresponding to the to-be-accessed resource and is input by a user; or
acquiring, by the terminal device by scanning a two-dimensional code, the URL corresponding to the to-be-accessed resource; or
acquiring, by the terminal device from another device by using Near Field Communication, the URL corresponding to the to-be-accessed resource.

With reference to the first aspect, in a second possible implementation manner of the first aspect, the detecting, by the terminal device, whether a stored domain name includes a domain name corresponding to the URL includes:
comparing, by the terminal device, characters in the URL one by one according to domain name information stored in a database and extracting a second-level domain name from the URL to obtain the domain name of the URL; or extracting a second-level domain name from the URL according to a delimiter in the URL to obtain the domain name of the URL; and
determining, by the terminal device, whether the terminal device stores the domain name, where:
   the domain name includes at least the second-level domain name.

With reference to the first aspect, in a third possible implementation manner of the first aspect, the triggering, by the terminal device, an application client corresponding to the domain name of the URL to acquire and display an application client page corresponding to the URL includes:
starting, by the terminal device, the application client and sending the URL to the application client, so that the application client sends a request to a network server for acquiring the application client page corresponding to the URL and displays the application client page; or
presenting, by the terminal device, a user with an identifier and/or an icon of the application client as one of options that can be used to open the to-be-accessed resource, and after the user selects the identifier and/or the icon of the application client, starting the application client and sending the URL to the application client, so that the application client sends a request to a network server for acquiring the application client page corresponding to the URL and displays the application client page.

With reference to the first aspect or any one of the first possible implementation manner of the first aspect to the third possible implementation manner of the first aspect, in a fourth possible implementation manner of the first aspect, before the triggering, by the terminal device, an application client corresponding to the domain name of the URL to acquire and display an application client page corresponding to the URL, the method further includes:
determining, by the terminal device, whether the application client corresponding to the domain name of the URL is installed; and
if the application client corresponding to the domain name of the URL is not installed, installing, by the terminal device, the application client and storing at least one domain name corresponding to the application client and the identifier and/or the icon of the application client.

With reference to the fourth possible implementation manner of the first aspect, in a fifth possible implementation manner of the first aspect, the determining, by the terminal device, whether the application client corresponding to the domain name of the URL is installed includes:
performing matching, by the terminal device, between the domain name corresponding to the URL and a locally stored application client list; if the matching is successful, determining that the application client is installed on the terminal device; and if the matching is unsuccessful, determining that the application client is not installed on the terminal device.

With reference to the fifth possible implementation manner of the first aspect, in a sixth possible implementation manner of the first aspect, before the installing, by the terminal device, the application client, the method further includes:
sending, by the terminal device, the domain name corresponding to the URL to a server, so that the server feeds back whether the application client corresponding to the domain name exists; and
the installing, by the terminal device, the application client specifically includes:
   installing, by the terminal device, the application client corresponding to the domain name if the application client exists.

According to a second aspect, an embodiment of the present invention provides a page operation processing apparatus, including:
an acquiring module, configured to acquire a uniform resource locator URL corresponding to a to-be-accessed resource;
a detecting module, configured to detect whether a stored domain name includes a domain name corresponding to the URL; and
a processing module, configured to: if the detecting module detects that the stored domain name includes the domain name corresponding to the URL, trigger an application client corresponding to the domain name of the URL to acquire and display an application client page corresponding to the URL.

With reference to the second aspect, in a first possible implementation manner of the second aspect, the acquiring module is specifically configured to:
acquire the URL that is corresponding to the to-be-accessed resource and is input by a user; or
acquire, by scanning a two-dimensional code, the URL corresponding to the to-be-accessed resource; or
acquire, from another device by using Near Field Communication, the URL corresponding to the to-be-accessed resource.

With reference to the second aspect, in a second possible implementation manner of the second aspect, the detecting module is specifically configured to:
compare characters in the URL one by one according to domain name information stored in a database and extract a second-level domain name from the URL to obtain the domain name of the URL; or extract a second-level domain name from the URL according to a delimiter in the URL to obtain the domain name of the URL; and determine whether the detecting module stores the domain name, where the domain name includes at least the second-level domain name.

With reference to the second aspect, in a third possible implementation manner of the second aspect, the triggering an application client corresponding to the domain name of the URL to acquire and display an application client page corresponding to the URL includes:
starting the application client and sending the URL to the application client, so that the application client sends a request to a network server for acquiring the application client page corresponding to the URL and displays the application client page; or
a first sending module is specifically configured to: present a user with an identifier and/or an icon of the application client as one of options that can be used to open the to-be-accessed resource, and after the user selects the identifier and/or the icon of the application client, start the application client and send the URL to the application client, so that the application client sends a request to a network server for acquiring the application client page corresponding to the URL and displays the application client page.

With reference to the second aspect or any one of the first possible implementation manner of the second aspect to the third possible implementation manner of the third aspect, in a fourth possible implementation manner of the third aspect, the apparatus further includes:
a determining module, configured to determine whether the application client corresponding to the domain name of the URL is installed, where:
   the processing module is further configured to: if the application client is not installed, install the application client and store at least one domain name corresponding to the application client and the identifier and/or the icon of the application client.

With reference to the fourth possible implementation manner of the second aspect, in a fifth possible implementation manner of the second aspect, the determining module is specifically configured to: perform matching between the domain name corresponding to the URL and a locally stored application client list; if the matching is successful, determine that the application client is installed; and if the matching is unsuccessful, determine that the application client is not installed.

With reference to the fifth possible implementation manner of the second aspect, in a sixth possible implementation manner of the second aspect, the processing module is further configured to:
send the domain name corresponding to the URL to a server, so that the server feeds back whether the application client corresponding to the domain name exists; and the installing, by the terminal device, the application client specifically includes: installing the application client corresponding to the domain name if the application client exists.

According to a third aspect, an embodiment of the present invention provides a terminal, including:
a memory, configured to store a domain name corresponding to an application client installed on the terminal; and
a processor, configured to: acquire a uniform resource locator URL corresponding to a to-be-accessed resource; detect whether the stored domain name includes a domain name corresponding to the URL; and if it is detected that the stored domain name includes the domain name corresponding to the URL, trigger an application client corresponding to the domain name of the URL to acquire and display an application client page corresponding to the URL.

With reference to the third aspect, in a first possible implementation manner of the third aspect, the terminal further includes:
an input device, configured to receive the URL that is corresponding to the to-be-accessed resource and is input by a user and send the URL to the processor; or
a Near Field Communication receiver, configured to receive the URL corresponding to the to-be-accessed resource by using Near Field Communication and send the URL to the processor.

With reference to the third aspect or the first possible implementation manner of the third aspect, in a second possible implementation manner of the third aspect, the terminal further includes:
an image acquiring device, configured to acquire a two-dimensional code image and send the two-dimensional code image to the processor, where:
   the processor is further configured to parse the two-dimensional code image to access the URL corresponding to the resource.

With reference to the third aspect, in a third possible implementation manner of the third aspect, the detecting whether the stored domain name includes a domain name corresponding to the URL specifically includes:
comparing characters in the URL one by one according to domain name information stored in a database and extracting a second-level domain name from the URL to obtain the domain name of the URL; or extracting a second-level domain name from the URL according to a delimiter in the URL to obtain the domain name of the URL; and
determining whether the terminal stores the domain name, where:
   the domain name includes at least the second-level domain name.

With reference to the third aspect, in a fourth possible implementation manner of the third aspect, the triggering an application client corresponding to the domain name of the URL to acquire and display an application client page corresponding to the URL includes:
starting the application client and sending the URL to the application client, so that the application client sends a request to a network server for acquiring the application client page corresponding to the URL and displays the application client page; or
presenting a user with an identifier and/or an icon of the application client as one of options that can be used to open the to-be-accessed resource, and after the user selects the identifier and/or the icon of the application client, starting the application client and sending the URL to the application client, so that the application client sends a request to a network server for acquiring the application client page corresponding to the URL and displays the application client page.

With reference to the third aspect or any one of the first possible implementation manner of the third aspect to the fourth possible implementation manner of the third aspect, in a fifth possible implementation manner of the third aspect, the processor is further configured to: determine whether the application client corresponding to the domain name of the URL is installed; and if the application client corresponding to the domain name of the URL is not installed, install the application client and store at least one domain name corresponding to the application client and the identifier and/or the icon of the application client.

With reference to the fifth possible implementation manner of the third aspect, in a sixth possible implementation manner of the third aspect, the determining whether the application client corresponding to the domain name of the URL is installed includes: performing matching between the domain name corresponding to the URL and a locally stored application client list; if the matching is successful, determining that the application client is installed on the terminal device; and if the matching is unsuccessful, determining that the application client is not installed on the terminal device.

With reference to the sixth possible implementation manner of the third aspect, in a seventh possible implementation manner of the third aspect,
the processor is further configured to send the domain name corresponding to the URL to a server, so that the server feeds back whether the application client corresponding to the domain name exists; and the installing, by the terminal device, the application client specifically includes: installing the application client corresponding to the domain name if the application client exists.

Embodiments of the present invention provide a page operation processing method and apparatus, and a terminal. According to the method, a to-be-accessed resource, such as a web page link, is opened by using an application client, and an application client page is displayed on a terminal device side, which reduces consumption of network traffic, and facilitates user operations and page browsing, thereby improving user experience.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic flowchart of Embodiment 1 of a page operation processing method according to the present invention;
FIG. 2 is a schematic flowchart of Embodiment 2 of a page operation processing method according to the present invention;
FIG. 3 is a schematic flowchart of Embodiment 3 of a page operation processing method according to the present invention;
FIG. 4 is a signaling diagram of Embodiment 4 of a page operation processing method according to the present invention;
FIG. 5 is a signaling diagram of Embodiment 5 of a page operation processing method according to the present invention;
FIG. 6 is a signaling diagram of Embodiment 6 of a page operation processing method according to the present invention;
FIG. 7 is a schematic structural diagram of Embodiment 1 of a page operation processing apparatus according to the present invention;
FIG. 8 is a schematic structural diagram of Embodiment 2 of a page operation processing apparatus according to the present invention; and
FIG. 9 is a schematic structural diagram of Embodiment 1 of a terminal according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

### Embodiment 1

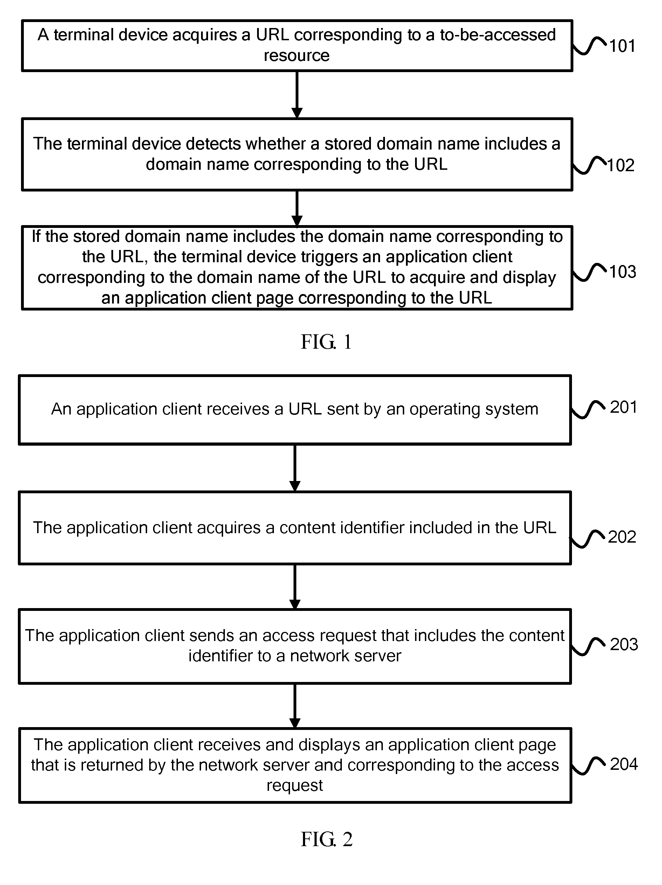

FIG. 1 is a schematic flowchart of Embodiment 1 of a page operation processing method according to the present invention. This embodiment of the present invention provides a page operation processing method. The method may be executed by any page operation processing apparatus that executes a page operation processing method, where the apparatus may be implemented by using software and/or hardware. In this embodiment, the page operation processing apparatus may be integrated into a terminal device. As shown in FIG. 1, the method according to this embodiment includes:

Step 101. A terminal device acquires a URL corresponding to a to-be-accessed resource.

Specifically, the to-be-accessed resource may be in multiple forms, for example, it may be a web page link, and it may also be an image link and an E-mail link. At present, users may share a web page in many manners, for example, the users may share a web page by using instant communication software, such as QQ, WeChat, and Microsoft Service Network (Microsoft Service Network, MSN for short); the users may share a web page in a messaging manner, such as a short message service and a multimedia message service or by using a social platform, such as Sina, Renren, and Web log (Web log, Blog for short); the users may further acquire a web page link by scanning a two-dimensional code, for example, scanning a two-dimensional code by using a mobile phone, or in a Near Field Communication (Near Field Communication, NFC for short) manner, for example, contact between mobile phones.

A user who receives a web page link may implement access to the web page by clicking the web page link, that is, when the user clicks the web page link on the terminal device, the terminal device acquires a URL corresponding to the web page link. After a web page link is acquired by scanning a two-dimensional code or using an NFC manner, the terminal device automatically acquires a URL corresponding to the web page link. In this scenario, after the terminal device acquires the web page link, the user can implement access to the web page without clicking the web page link.

Step 102. The terminal device detects whether a stored domain name includes a domain name corresponding to the URL.

Specifically, in the prior art, an operating system of the terminal device, such as the Android (Android) system or the operating system (IOS) developed by Apple, Inc., still cannot recognize a domain name of a URL. Therefore, an existing mechanism of the system is extended in this embodiment of the present invention. For example, the Intent mechanism of the Android system is extended, so that the Android system can recognize a domain name of a URL. For example, for a URL of the Taobao website, a domain name taobao.com included in the URL can be recognized after system extension.

After acquiring the URL, the terminal device analyzes the domain name of the URL, and determines, according to an analysis result, whether an application (Application, APP for short) client corresponding to the domain name of the URL is installed on the terminal device, that is, determines whether the domain name of the URL is included in a domain name stored on the terminal device. Further, subsequent processing is performed according to a result of the determining. If the domain name of the URL is included in the domain name stored on the terminal device, step 103 is performed; if the domain name of the URL is not included in the domain name stored on the terminal device, the URL is accessed, according to the prior art, by using a browser installed on the terminal device, or the user is prompted whether the application client needs to be installed, which is not specifically limited in this embodiment.

Step 103. If the stored domain name includes the domain name corresponding to the URL, the terminal device triggers an application client corresponding to the domain name of the URL to acquire and display an application client page corresponding to the URL.

Specifically, the user acquires the URL corresponding to the to-be-accessed resource, and the application client corresponding to the URL is installed on the terminal device used by the user. When the two conditions are met, the terminal device sends the URL to the application client installed inside the terminal device, the application client interacts and communicates with a network server to acquire the application client page corresponding to the domain name of the URL, and the terminal device displays the application client page to the user. The application client page is a page that matches a screen of the terminal device. Compared with a page opened by using a browser in the prior art, the application client page includes less content. For example, a size of displayed information, such as a font and an image, is relatively large.

According to this embodiment of the present invention, a terminal device analyzes a domain name of a URL corresponding to a to-be-accessed resource, and triggers an application client corresponding to the domain name of the URL to acquire and display to a user an application client page corresponding to the URL, which reduces consumption of network traffic. In addition, the application client page matches a screen of the terminal device, which reduces key-based misoperations of the user, and facilitates page browsing of the user, thereby improving user experience.

On the foregoing basis, step 101 may specifically include: acquiring, by the terminal device, the URL that is corresponding to the to-be-accessed resource and is input by the user; or acquiring, by the terminal device by scanning a two-dimensional code, the URL corresponding to the to-be-accessed resource; or acquiring, by the terminal device from another device by using Near Field Communication, the URL corresponding to the to-be-accessed resource. That is, the to-be-accessed resource may be input by the user, for example, the user clicking a web page link or manually inputting a website, and the URL corresponding to the to-be-accessed resource may also be acquired by scanning a two-dimensional code or in a manner in which terminal devices come into contact with each other. This embodiment of the present invention is not limited thereto, so as to increase application scenarios of the present invention.

On the foregoing basis, step 102 may specifically include: comparing, by the terminal device, characters in the URL one by one according to domain name information stored in a database and extracting a second-level domain name from the URL to obtain the domain name of the URL; or extracting, by the terminal device, a second-level domain name from the URL according to a delimiter in the URL to obtain the domain name of the URL; and determining, by the terminal device, whether the terminal device stores the domain name. The domain name includes at least the second-level domain name.

A web page domain name is generally named according to a rule for naming a domain name. That is, domain names may be classified into different levels, including a top-level domain name and a second-level domain name. The top-level domain name includes a country code and an international domain name. For the country code, for example, the domain name of China is .cn, and the domain name of Japan is .jp; for the international domain name, for example, the domain name of commercial enterprises is .com, and the domain name of non-profit organizations is .org. The second-level domain name refers to a domain name below the top-level domain name. When it is below an international top-level domain name, it refers to a web name of a domain name registrant, such as ibm, yahoo, and microsoft; when it is below a national top-level domain name, it refers to a symbol that represents a type of a registered enterprise, such as com, edu, gov, and net.

According to the rule for naming a domain name, a domain name may be extracted by compiling a program. For example, for an acquired URL, a top-level domain name of the URL may be extracted first, then a second-level domain name is extracted, and finally the top-level domain name and the second-level domain name are combined to obtain a domain name of the URL. A method for extracting a top-level domain name and a second-level domain name is not limited. It may be: Starting from a character in the URL, subsequent characters are compared one by one according to a top-level domain name stored in the database to obtain the top-level domain name of the URL; and then starting from the left side of the first character of the top-level domain name, previous characters are compared one by one according to a second-level domain name stored in the database to obtain the second-level domain name of the URL, and so on, the domain name of the URL is finally obtained. Alternatively, it may also be: The URL is directly divided into several parts according to a special character (which is generally "."), the top-level domain name and the second-level domain name are extracted, and the like. For another example, for www.google.com.cn/XXXXXX, top-level domain names cn and com are extracted in sequence according to separation by ".", and then google is extracted; therefore, it is detected that google.com.cn is the extracted domain name herein.

It should be noted that the domain name described in any embodiment of the present invention includes at least a second-level domain name corresponding to an application. For example, the domain name of Taobao includes at least a second-level domain name taobao. Certainly, the top-level domain name, such as taobao.com, may be further included, which is also not limited in the embodiments of the present invention.

On the foregoing basis, step 103 may specifically include: starting, by the terminal device, the application client and sending the URL to the application client, so that the application client sends a request to the network server for acquiring the application client page corresponding to the URL and displays the application client page; or presenting, by the terminal device, the user with an identifier and/or an icon of the application client as one of options that can be used to open the to-be-accessed resource, and after the user selects the identifier and/or the icon of the application client, starting the application client and sending the URL to the application client, so that the application client sends a request to the network server for acquiring the application client page corresponding to the URL and displays the application client page. In this embodiment, which manner is used by the terminal device depends on a mechanism used by the operating system of the terminal device.

On the foregoing basis, before step 103, the method further includes: determining, by the terminal device, whether the application client corresponding to the domain name of the URL is installed; and if the application client corresponding to the domain name of the URL is not installed, installing, by the terminal device, the application client and storing at least one domain name corresponding to the application client and the identifier and/or the icon of the application client. The determining, by the terminal device, whether the application client corresponding to the domain name of the URL is installed includes: performing matching, by the terminal device, between the domain name corresponding to the URL and a locally stored application client list; if the matching is successful, determining that the application client is installed on the terminal device; and if the matching is unsuccessful, determining that the application client is not installed on the terminal device. In this embodiment, it is determined first whether the application client corresponding to the URL to be accessed is installed on the terminal device and then a prompt message is given if the application client is not installed, so that the user independently chooses whether to perform installation, thereby enhancing user experience.

Further, before the installing, by the terminal device, the application client, the method may further include: sending, by the terminal device, the domain name corresponding to the URL to a server, so that the server feeds back whether the application client corresponding to the domain name exists; and the installing, by the terminal device, the application client specifically includes: installing, by the terminal device, the application client corresponding to the domain name if the application client exists; accessing, by the terminal device, the URL by using a browser if the application client does not exist.

There are several main methods available for the terminal device to analyze, according to the domain name of the URL acquired by parsing, whether a website corresponding to the domain name has an application client:

Method 1: The terminal device performs matching between the acquired domain name and the locally stored application client list, where the application client list is provided by an electronic market (Android, Apple, and the like) and records common domain names and information about application clients corresponding to the common domain names.

If the terminal device finds, in the application client list, the application client corresponding to the domain name of the URL, the terminal device prompts the user to perform installation; if the terminal device cannot find the application client corresponding to the domain name of the URL, it is considered that the application client corresponding to the domain name of the URL does not exist, and the terminal device directly accesses the URL according to an existing method, that is, by using a browser.

Method 2: A query mechanism is added between the terminal device and the electronic market so that the terminal device and the electronic market can communicate with each other. The terminal device sends a domain name to the electronic market, and the electronic market feeds back whether an application client corresponding to the domain name exists. If the application client exists, the terminal device prompts the user to perform installation; if the application client does not exist, the terminal device directly accesses the URL according to an existing method, that is, by using a browser.

Method 3: A learning function is added to the terminal device. If the application client corresponding to the domain name was installed on the terminal device, the operating system retains information about the application client, that is, the information about the application client is not discarded when the application client is uninstalled.

If the terminal device detects that the application client corresponding to the domain name was installed, the terminal device invokes the previously retained information about the application client and prompts the user to perform installation; if the application client was not installed before, processing is performed according to Method 1 or Method 2.

### Embodiment 2

FIG. 2 is a schematic flowchart of Embodiment 2 of a page operation processing method according to the present invention. This embodiment describes the page operation processing method provided in the present invention from a perspective of an application client. As shown in FIG. 2, the method according to this embodiment includes:

Step 201. An application client receives a URL sent by an operating system.

Specifically, the application client and the operating system on a terminal device interacts with each other. After the terminal device acquires a URL corresponding to a to-be-accessed resource, the operating system of the terminal device recognizes a domain name of the URL, and triggers an application client corresponding to the domain name. That is, the application client receives the URL sent by the operating system.

It should be noted that one application may be corresponding to multiple domain names. For example, for a URL of the Taobao website, a domain name included in the URL is taobao.com. The taobao.com is corresponding to one Taobao application, but a domain name corresponding to the Taobao application is not limited to taobao.com and may also be taobao.com.cn, taobao.com.uk, or the like. The terminal device acquires the URL of the Taobao website, and the operating system of the terminal device recognizes that the domain name of the URL of the Taobao website, such as taobao.com, is one of multiple domain names that are corresponding to the application and are stored on the terminal device in advance. The operating system then triggers the Taobao application, and the Taobao application receives the URL of the Taobao website sent by the operating system.

Step 202. The application client acquires a content identifier included in the URL.

Specifically, after the application client receives the URL, the application client generates an access request according to a mode of the application client and the content identifier. For example, the mode of the application client may be a combined mode of Native and Web (Native+Web); for example, an application client is developed by using the Java technology, but communication between the application client and a network server is conducted in Web mode. The mode of the application client may also be a Native (Native) mode; for example, the application client is developed by using Java, and communication between the application client and the network server may also be conducted by using a Java instruction. When the mode of the application client is the combined mode, the content identifier is the URL itself; when the mode of the application client is the Native mode, the content identifier is key information and a filter condition in the URL, which is not limited in this embodiment.

Step 203. The application client sends an access request that includes the content identifier to a network server.

Specifically, if the mode of the application client is the combined mode, the access request is the URL itself, and the application client sends the URL to the network server; if the mode of the application client is the Native mode, the access request is an application request that matches the key information and the filter condition in the URL, and in this case, the application client performs mapping processing on the key information and the filter condition in the URL that are acquired in step 202 to generate the application request that matches the key information and the filter condition, and sends the application request to the network server using a Java instruction in a Hyper Text Transfer Protocol Get (Hyper Text Transfer Protocol Get, HTTP GET for short) manner to request for acquiring an application client page corresponding to the key information and the filter condition. The key information in the URL refers to information that is in the URL and uniquely represents a page pointed to by the URL, such as identity (Identity, ID for short) information; the filter condition refers to a sub-page that is related to the ID, such as user comments and product details.

Step 204. The application client receives and displays an application client page that is returned by the network server and corresponding to the access request.

Specifically, the application client page is different from a page opened by using a browser in the prior art and is a page that matches a screen of the terminal device. Compared with the page opened by using a browser, the application client page includes fewer images and less information, thereby reducing consumption of network traffic for the user.

In this embodiment, a terminal device accesses, by using an application client, a URL corresponding to a to-be-acquired resource, and displays an application client page corresponding to the URL to a user, which reduces consumption of network traffic. In addition, the application client page matches a screen of the terminal device, which reduces key-based misoperations of the user, and facilitates page browsing of the user, thereby improving user experience.

On the foregoing basis, if the application client uses the Native application mode, the acquiring, by the application client, a content identifier included in the URL may include: analyzing, by the application client, the URL and acquiring the key information and the filter condition in the URL.

Further, the sending, by the application client, an access request that includes the content identifier to a network server includes: sending, by the application client to the network server, the application request that matches the key information and the filter condition in the URL.

If the application client uses the combined application mode, in the two steps of acquiring, by the application client, a content identifier included in the URL and sending, by the application client, an access request that includes the content identifier to a network server, the URL does not need to be analyzed and the application request does not need to be generated; instead, the URL is directly sent to the network server because in this mode, communication between the application client and the network server is conducted in a Web manner.

### Embodiment 3

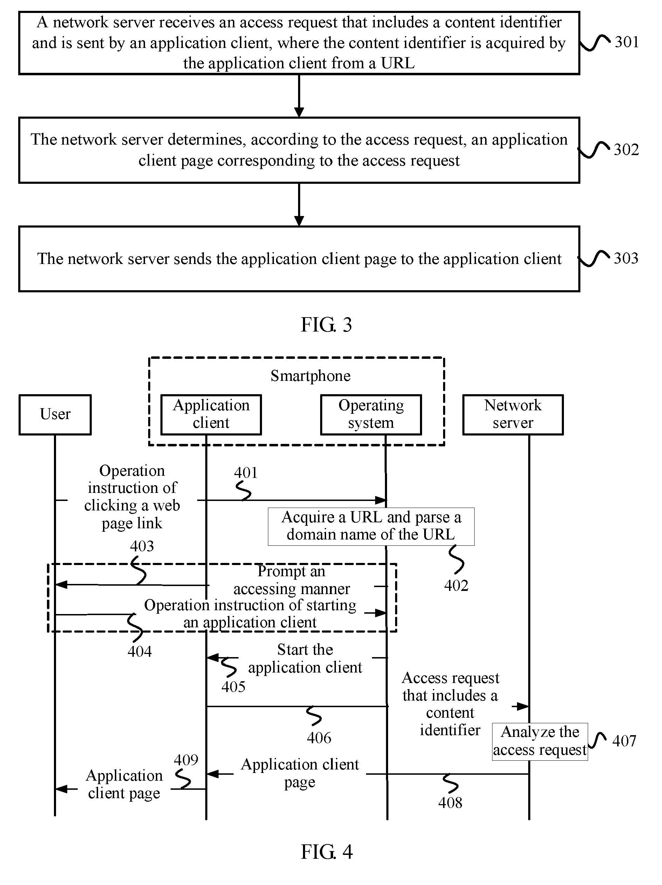

FIG. 3 is a schematic flowchart of Embodiment 3 of a page operation processing method according to the present invention. This embodiment describes the page operation processing method provided in the present invention from a perspective of a network server. As shown in FIG. 3, the method according to this embodiment includes:

Step 301. A network server receives an access request that includes a content identifier and is sent by an application client, where the content identifier is acquired by the application client from a URL.

Specifically, the access request may be the URL itself, and in this case, the content identifier is also the URL itself; the access request may also be an application request that matches key information and a filter condition in the URL, and in this case, the content identifier is the key information and the filter condition in the URL. An application request generally includes an application key (App Key), service data, a timestamp, and the like, where the App Key is a unique identifier of the application client when an application programming interface (Application Programming Interface, API for short) is invoked, and the App Key is used by the network server to identify the application client.

Step 302. The network server determines, according to the access request, an application client page corresponding to the access request.

Specifically, after receiving the access request sent by the application client, the network server sends the application client page corresponding to the access request to the application client, so that the application client page is displayed by using the application client.

The application client page is different from a page opened by using a browser in the prior art and is a page that matches a screen of a terminal device. Compared with the page opened by using a browser, the application client page includes fewer images and less information, thereby reducing consumption of network traffic for a user.

Step 303. The network server sends the application client page to the application client.

In this embodiment of the present invention, a terminal device accesses, by using a network server and an application client, a URL corresponding to a to-be-accessed resource, which reduces consumption of network traffic. In addition, an application client page matches a screen of the terminal device, which reduces key-based misoperations of a user, and facilitates page browsing of the user, thereby improving user experience.

In one scenario, the application client may use a combined application mode and the determining, by the network server according to the access request, an application client page corresponding to the access request includes the following two conditions:
1. If the URL is a URL corresponding to the application client page, the network server determines, according to the URL, the application client page corresponding to the access request.
2. The network server performs mapping processing on the URL and determines an application client page corresponding to a page pointed to by the URL.

In another scenario, the application client uses the Native application mode, and the receiving, by a network server, an access request that includes a content identifier and is sent by an application client includes: receiving, by the network server, an application request sent by the application client, where the application request matches the key information and the filter condition in the URL. Further, the determining, by the network server according to the access request, an application client page corresponding to the access request includes: returning, by the network server, a page corresponding to the application request to the terminal device on which the application client is installed for display.

The following describes technical solutions of the page operation processing method in detail by using several specific embodiments.

### Embodiment 4

As shown in FIG. 4, a page operation processing method provided in this embodiment of the present invention is implemented by signaling interaction between a user, a terminal device (on which an application client is installed), and a network server. In this embodiment, the application client is integrated into the terminal device, and the terminal device may be a smartphone, a tablet computer, and the like. This embodiment and the following embodiments are described by using a smartphone as an example and are a specific implementation manner in a scenario in which an application client is installed on the smartphone, and a user acquires a URL by clicking a web page link. Certainly, persons skilled in the art may understand that this embodiment and the following embodiments are not limited to the smartphone. Specific steps in this embodiment are as follows:

Step 401. Receive an operation instruction that a user clicks a web page link.

Step 402. Acquire a URL and parse a domain name of the URL.

Specifically, an operating system of the smartphone may acquire the URL corresponding to the web page link, parse the domain name of the URL, and detect whether an application client corresponding to the domain name is installed on the smartphone.

The operating system cannot recognize a domain name of a URL in the prior art, that is, when a URL is given, a domain name included in the URL cannot be extracted from the URL in the prior art. Therefore, an existing mechanism of the operating system of the smartphone needs to be extended, so that the operating system of the smartphone can recognize the domain name of the URL.

For example, for a URL link of the Taobao website, after the mechanism of the operating system is extended, the operating system of the smartphone can recognize that the URL link includes a domain name taobao.com.

When the application client is being installed on the smartphone, the application client registers a page processing capability with the operating system of the smartphone. An installation file of the application client carries a domain name that can be accessed by the application. When the application client is being installed, the operating system obtains the file including the domain name that can be accessed by the application client. That is, when the application client is being installed, the application client sends a registration file that includes the domain name information to the operating system so as to complete registration of the page processing capability. The smartphone stores at least one domain name corresponding to the application client and an identifier of the application client, so that the smartphone learns that the application client can open an application client page corresponding to the domain name of the access address locator URL. The page processing capability indicates that the application client can access a URL that includes a domain name corresponding to the application client. For example, when being installed in the Android system, the Taobao application registers, with the Android system, a capability of accessing a URL that includes the domain name taobao.com.

Step 403. Prompt an accessing manner.

Specifically, the operating system of the smartphone may add the identifier of the application client to a displayed window and present the user with the identifier as one of options that can access the web page link.

Step 404. Receive an operation instruction that the user chooses to start an application client.

The operating system of the smartphone receives the operation instruction that the user chooses to start the application client.

Step 403 and step 404 are optional steps, and step 405 may be directly performed.

Step 405. Start the application client.

Specifically, the operating system of the smartphone may send the URL to the application client, and the application client receives the URL sent by the operating system of the smartphone.

The operating system of the smartphone may trigger the application client in the following two manners:

Manner 1: Step 403 and step 404 are performed in sequence after step 402 is performed.

Manner 2: Step 405 is directly performed after step 402 is performed.

Which manner of the foregoing two manners is used depends on a mechanism used by the operating system. For example, in the Android system:
(1) if an explicit intent mechanism (Explicit Intent) of Android is used, the Android system directly opens a corresponding application client when the user clicks a web page link;
(2) if an implicit intent mechanism (Implicit Intent) of Android is used, the Android system displays a window to a user for selection when the user clicks a web page link.

Specifically, the Intent mechanism is a data structure that abstractly describes one operation to be performed, and provides a function of connecting two different components in a program running process. An application program sends a type of request information to the Android system by using the Intent mechanism, and the Android system selects, according to content of the request information, a component that can process the request message. For example, an Android phone is used to dial a call. An Intent object that has a call button (CALL_BUTTON) behavior is sent to the Android system after a dial key is pressed. The Android system finds, according to the request information and from an AndroidMnifest.xml file with which an application is registered, a phone number dialing program that can process the request information. When a phone number is input and the dial key is pressed again, the dialing program sends an Intent request that includes action call (ACTION_CALL) and phone number data to the Android system, and the Android system finds an appropriate application program for processing.

Intent that clearly specifies a component name is explicit intent, and the Android system directly start a target component specified by the component name to process the request.

Intent that does not clearly specify a target component is called implicit intent. The implicit intent does not have a clear target; therefore the Android system must help the application to find an appropriate target component to process the request. A specific method for selecting a parsing mechanism for this type of Intent message is as follows: retrieving all IntentFilter filters that are registered with the AndroidManifest.xml file and are used to define each component that can process an Intent message, and comparing the filters with content of the Intent message. If content of an implicit intent request matches a filtering rule of an IntentFilter filter in a component, the Android system selects the component as the target component for processing the implicit intent message.

In this embodiment, the application client is an application client that uses a Native+Web mode. In this mode, for example, the application client is developed by using the Java technology, but communication between the application client and a network server is conducted in Web mode.

Step 406. The application client sends an access request that includes a content identifier to a network server.

The application client communicates with the network server and sends the access request that includes the content identifier, that is, the URL, to the network server.

Step 407. The network server analyzes the access request.

After receiving the URL sent by the application client, the network server analyzes the URL as follows:
(1) If the URL is a URL corresponding to the application client, the network server directly returns an application client page corresponding to the URL to the application client.
(2) If the URL is not a URL corresponding to the application client, for example, the URL is a URL corresponding to a personal computer (Personal Computer, PC for short) or a URL corresponding to a mobile phone browser, the network server performs mapping processing on the URL and returns an application client page corresponding to a page pointed to by the URL to the application client.

It should be noted that in any embodiment of the present invention, for a same domain name, pages displayed on a PC, a mobile phone browser, and an application client are different. The network server may store one set or two sets of pages of a same URL, which is not limited herein. For example, if the network server stores one set of pages, but there are two sets of cascading style sheets (Cascading Style Sheet, CSS for short), which are generally called style sheets, the network server may perform automatic determining according to a type of a user terminal; if the network server stores two sets of pages, one set for pages corresponding to the PC and the other set for pages corresponding to the mobile phone browser, the network server end performs mapping on the URL according to a sender of the URL and returns, according to the type of the sender, a page matching the sender to the sender.

Step 408. The network server sends an application client page to the application client.

Step 409. The application client displays the application client page to the user.

In this embodiment of the present invention, after a user clicks a web page link, the web page link is analyzed by signaling interaction between an application client, a mobile phone, and a network server, and an application client page corresponding to the web page link is accessed by using the application client, which reduces consumption of network traffic and key-based misoperations of the user, thereby further facilitating page browsing of the user and improving user experience.

### Embodiment 5

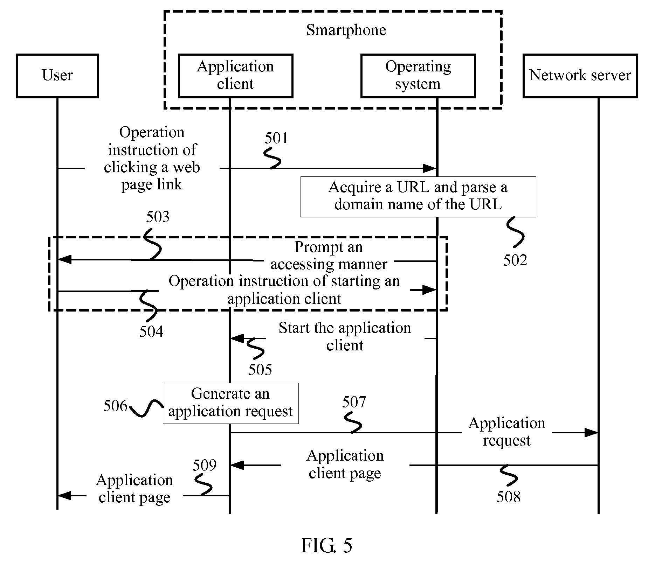

As shown in FIG. 5, a page operation processing method provided in this embodiment of the present invention is implemented by signaling interaction between a user, an application client, a terminal device, and a network server, and the terminal device being a smartphone is used as an example. This embodiment is another specific implementation manner in a scenario in which an application client is installed on the smartphone. Specific steps are as follows:

Step 501 to step 505 are the same as step 401 to step 405 in Embodiment 4, and details are not described herein again.

Step 506. The application client receives the URL sent by the terminal device and generates an application request.

Specifically, in this embodiment, the application client is an application client that uses a Native application mode, that is, an application client in Native mode. This mode indicates that the application client is developed by using the Java technology, and communication between the application client and a network server uses a Java instruction. For example, the communication between the application client and the network server may be conducted by using a GET manner of the Hypertext Transfer Protocol (Hypertext Transfer Protocol, HTTP for short), that is, the communication is conducted in the HTTP GET manner, where HTTP GET is generally used to acquire/query resource information.

In this embodiment, the application client analyzes the received URL, extracts key information and a filter condition from the URL, and generates, according to the key information and the filter condition, an application request corresponding to the key information and the filter condition. The key information refers to information that is in the URL and uniquely represents a page pointed to by the URL, such as ID information; the filter condition refers to sub-page information that is related to the ID, such as user comments and product details. The filter condition and the key information together determine content included in an application client page, where the content may include information, such as text and an image.

Step 507. The application client sends the application request to a network server.

Specifically, in this embodiment, the application request refers to the application request that is generated in step 506 and matches the key information and the filter condition in the URL. The application client performs mapping processing according to the key information and the filter condition in the URL that are acquired in step 506, and generates the application request that matches the key information and the filter condition. The application request is a Java instruction, that is, the application client and the network server directly communicate by using a Java instruction in the HTTP GET manner.

The application client sends the application request to the network server in the HTTP GET manner to request for acquiring an application client page corresponding to the key information and the filter condition in the URL.

Step 508. The network server sends an application client page to the application client.

It should be noted that a difference between this embodiment of the present invention and Embodiment 4 lies in that, in this embodiment, the network server does not need to perform analysis and mapping on the application request but directly returns the application client page specified by the application request to the application client. This is because in step 408 in Embodiment 4, the application client communicates with the network server in the Web manner, a URL is sent, and URLs of a same page corresponding to a PC, a mobile phone browser, and the application client are different and need to be analyzed. For example, a URL of a shop accessed by a Chrome browser in a computer is http://shop68404486.taobao.com/?spm=0.0.0.0.4BGcaM; a URL of the shop accessed by a UC browser on a mobile phone is http://shop.m.taobao.com/shop/shop_index.htm? shop_id=68404486&sid=96cdb91451601574; a URL of the shop accessed by a Taobao application on a mobile phone is http://shop.m.taobao.com/shop/shop_index.htm?user_id=374476867. It can be learned that different URLs are corresponding to different manners. In this embodiment, an application request is used to conduct communication with the network server by using a Java instruction in the HTTP GET manner, and analysis and mapping do not need to be performed on the application request any more.

Step 509. The application client receives the application client page and displays the application client page to the user.

In this embodiment of the present invention, after a user clicks a web page link, the web page link is analyzed by signaling interaction between an operating system of a smartphone, an application client installed on the smartphone, and a network server, and an application client page corresponding to the web page link is accessed by using the application client, which reduces consumption of network traffic and key-based misoperations of the user, thereby further facilitating page browsing of the user and improving user experience.

### Embodiment 6

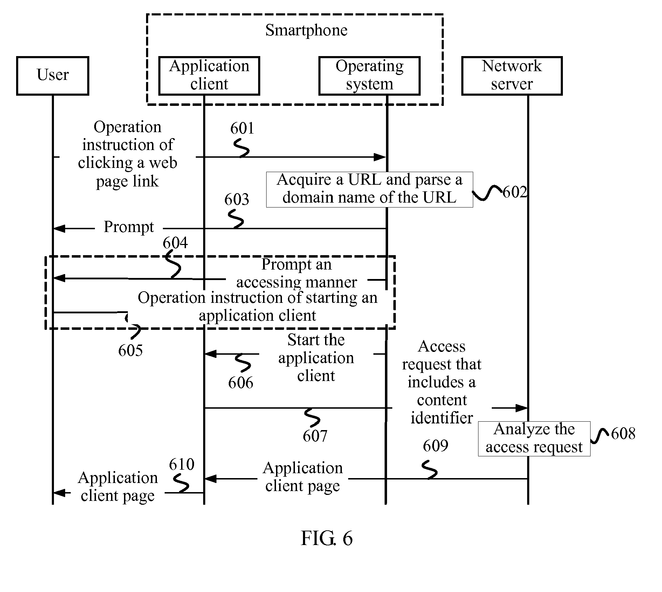

On the basis of the foregoing embodiments, this embodiment takes a condition in which an application client is not installed on a terminal device into consideration, which is described based on Embodiment 4. As shown in FIG. 6:

Step 601 is the same as step 401.

Step 602. An operating system of a smartphone acquires a URL corresponding to the web page link, acquires a domain name of the URL by parsing, and detects whether an application client corresponding to the domain name is installed on the smartphone.

If the application client corresponding to the domain name is not installed on the smartphone, the smartphone analyzes whether the URL has a corresponding application client.

Specifically, analysis is performed in the following manners:

Manner 1: The smartphone performs matching between the acquired domain name and a locally stored application client list. The application client list is provided by a server (which may specifically be a server of an electronic market) and records common domain names and information about application clients corresponding to the common domain names.

If the smartphone finds, in the application client list, the application client corresponding to the domain name of the URL, step 603 is performed; if the application client corresponding to the domain name of the URL cannot be found, it is considered that the application client corresponding to the domain name of the URL does not exist, and the smartphone directly accesses the URL according to an existing method, that is, by using a browser.

Manner 2: A query mechanism is added between the smartphone and the electronic market so that the smartphone and the electronic market can communicate with each other. The smartphone sends a domain name to the electronic market, and the electronic market feeds back whether an application client corresponding to the domain name exists. If the application client exists, step 603 is performed; if the application client does not exist, the smartphone may directly access the URL according to an existing method, that is, by using a browser.

Manner 3: A learning function is added to the smartphone. If the application client corresponding to the domain name was installed on the smartphone, the operating system retains information about the application client, that is, the information about the application client is not discarded when the application client is uninstalled.

If the smartphone detects that the application client corresponding to the domain name was installed, the smartphone invokes the previously retained information about the application client, and step 603 is performed; if the application client was not installed before, processing is performed according to a method in Manner 1 or Manner 2.

Optionally, the foregoing method may further include:

Step 603. The operating system of the smartphone prompts the user whether to install the application client.

Specifically, if the user chooses to install the application client, the smartphone communicates with the network server, downloads an installation program of the application client from the network server, performs installation on the smartphone after the download is completed, and stores at least one domain name corresponding to the application client and an identifier and/or an icon of the application client. After the installation is completed, the operating system directly invokes the application client to access the URL. For subsequent operation steps, reference is made to step 403 to step 409 in Embodiment 4 and step 503 to step 509 in Embodiment 5, and details are not described herein again.

In addition, when the terminal device prompts the user whether to install the application client, an option, such as "Do not prompt for installation again", may be set. If the user chooses not to install the application client, an operation is performed according to a method in the prior art, and the web page link is accessed by using a browser on the smartphone. If the user chooses not to install the application client but does not select an option, such as "Do not prompt for installation again", when the user clicks and accesses the URL that includes the website domain name next time, the smartphone continues to prompt the user with an option asking whether to install the application client. If the user chooses not to install the application client and selects the option, such as "Do not prompt for installation again", the smartphone accesses the URL by using a browser according to a method in the prior art, and accesses, when the user clicks and accesses the URL that includes the website domain name next time, the URL by using a browser by default, and does not prompt the user whether to install the application client any more.

In this embodiment of the present invention, when an application client corresponding to a web page link is not installed on a smartphone, a user independently chooses whether to install the application client, so that the user can further independently decide whether to use a browser or an application client to access the web page link, which provides more user choices.

### Embodiment 7

A difference between this embodiment and the foregoing embodiment lies in that this embodiment takes a condition in which an application client cannot open a page corresponding to a URL into consideration. After a network server receives a URL or an application request sent by the application client, a processing method performed when a corresponding application client page cannot be found on the network server may specifically include:

In one application scenario, an application client uses a Native+Web mode, that is, the corresponding application client in Embodiment 4 of the present invention. In this application scenario, a difference between this embodiment and Embodiment 4 is as follows:

After the network server receives the URL sent by the application client and analyzes the URL, the network server finds that the application client page corresponding to the URL does not exist on the network server, but the network server stores a page of the URL corresponding to a PC or a page of the URL corresponding to a browser. In this case, the network server returns, to the client, a response that the application client page corresponding to the URL cannot be found.

After receiving the response, returned by the network server, that the application client page corresponding to the URL cannot be found, the application client prompts the smartphone to access the URL by using a default browser. Further, the smartphone accesses the URL by invoking the default browser.

If the network server finds, after analyzing the URL, that the application client page corresponding to the URL does not exist on the network server, and the page of the URL corresponding to the PC and the page of the URL corresponding to the browser do not exist on the network server, that is, none of the pages corresponding to the URL exists, the network server returns an error response to the application client, and the application client indicates to the user that the page does not exist.

In another application scenario, an application client uses a Native mode, that is, the corresponding application client in Embodiment 5 of the present invention. In this case, a difference between this embodiment and the foregoing embodiment is as follows:

After receiving the application request sent by the application client, the network server cannot find an application client page corresponding to the application request on the network server and therefore returns an error response to the application client. After receiving the error response returned by the network server, the application client prompts the smartphone to access the URL by using a default browser.

In this embodiment, information that a page corresponding to a web page link is not stored on a network server side is returned to notify a user of a processing condition after the user clicks the web page link, so that the user can access the web page link in another manner, thereby improving link processing efficiency and enhancing user experience.

### Embodiment 8

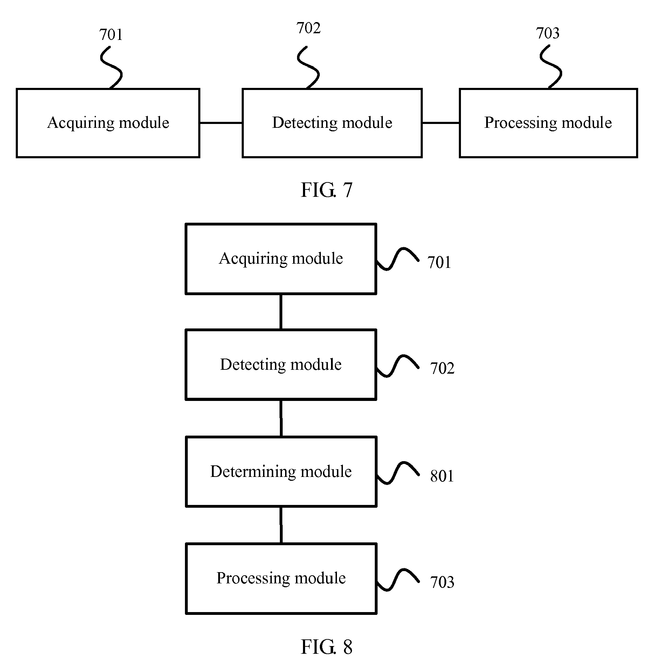

FIG. 7 is a schematic structural diagram of Embodiment 1 of a page operation processing apparatus according to the present invention. The page operation processing apparatus in this embodiment of the present invention may be integrated into a terminal. As shown in FIG. 7, the page operation apparatus in this embodiment includes an acquiring module 701, a detecting module 702, and a processing module 703.

The acquiring module 701 is configured to acquire a URL corresponding to a to-be-accessed resource; the detecting module 702 is configured to detect whether a stored domain name includes a domain name corresponding to the URL; the processing module 703 is configured to: if the detecting module 702 detects that the stored domain name includes the domain name corresponding to the URL, trigger an application client corresponding to the domain name of the URL to acquire and display an application client page corresponding to the URL.

The page operation processing apparatus in this embodiment may be used to execute the technical solutions in any of the foregoing page operation processing method embodiments. Implementation principles and technical effects in this embodiment are similar to those in the method embodiments, and details are not described herein again.

Further, the acquiring module 701 may specifically acquire the URL that is corresponding to the to-be-accessed resource and is input by a user; or the acquiring module 701 specifically acquires, by scanning a two-dimensional code, the URL corresponding to the to-be-accessed resource; or the acquiring module 701 specifically acquires, from another device by using Near Field Communication, the URL corresponding to the to-be-accessed resource.

On the foregoing basis, the detecting module 702 specifically compares characters in the URL one by one according to domain name information stored in a database and extracts a second-level domain name from the URL to obtain the domain name of the URL; or extracts a second-level domain name from the URL according to a delimiter in the URL to obtain the domain name of the URL; and determines whether the detecting module 702 stores the domain name.

Further, the triggering an application client corresponding to the domain name of the URL to acquire and display an application client page corresponding to the URL includes: starting the application client and sending the URL to the application client, so that the application client sends a request to a network server for acquiring the application client page corresponding to the URL and displays the application client page; or the processing module 703 is specifically configured to: present the user with an identifier and/or an icon of the application client as one of options that can be used to open the to-be-accessed resource, and after the user selects the identifier and/or the icon of the application client, start the application client and send the URL to the application client, so that the application client sends a request to a network server for acquiring the application client page corresponding to the URL and displays the application client page.

Further, based on FIG. 7, as shown in FIG. 8, the apparatus may further include: a determining module 801. The determining module 801 is configured to determine whether the application client corresponding to the domain name of the URL is installed; the processing module 703 is further configured to: if the application client is not installed, install the application client and store at least one domain name corresponding to the application client and the identifier and/or the icon of the application client.

Further, the determining module 801 is specifically configured to: perform matching between the domain name corresponding to the URL and a locally stored application client list; if the matching is successful, determine that the application client is installed; and if the matching is unsuccessful, determine that the application client is not installed.

Further, the processing module 703 may further be configured to send the domain name corresponding to the URL to a server, so that the server feeds back whether the application client corresponding to the domain name exists; and the installing, by the terminal device, the application client specifically includes: installing the application client corresponding to the domain name if the application client exists.

### Embodiment 9

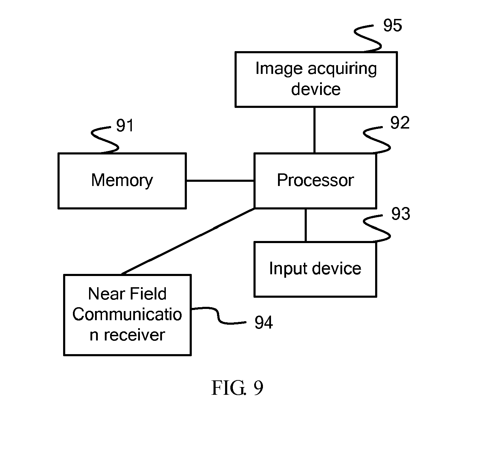

FIG. 9 is a schematic structural diagram of Embodiment 1 of a terminal according to the present invention. As shown in FIG. 9, the terminal includes: a memory 91 and a processor 92.

The memory 91 is configured to store a domain name corresponding to an application client installed on the terminal. The processor 92 is configured to: acquire a URL corresponding to a to-be-accessed resource; detect whether the domain name stored in the memory 91 includes a domain name corresponding to the URL; and if it is detected that the stored domain name includes the domain name corresponding to the URL, trigger an application client corresponding to the domain name of the URL to acquire and display an application client page corresponding to the URL.

The terminal may execute the foregoing method embodiments, the implementation principles in this embodiment are similar to those in the foregoing method embodiments, and details are not described herein again.

In this embodiment, a terminal opens a to-be-accessed resource, such as a web page link, by using an application client, and displays an application client page on a terminal device side. The application client page is different from a page generally opened by using a browser, and an amount of information included in the application client page, such as an image and text, is less than that included in the page opened by using the browser, thereby reducing consumption of network traffic and facilitating user operations and page browsing; a font on the application client page is larger than that on the page opened by using the browser, thereby reducing misoperations and improving user experience.

On the basis of the embodiment shown in FIG. 9, the terminal may further include: any combination of an input device 93, and a Near Field Communication receiver 94, and an image acquiring device 95. The input device 93 is configured to receive the URL that is corresponding to the to-be-accessed resource and is input by a user and send the URL to the processor 92. The Near Field Communication receiver 94 is configured to receive, by using NEAR Field Communication, the URL corresponding to the to-be-accessed resource and send the URL to the processor 92. The image acquiring device 95 is configured to acquire a two-dimensional code image and send the two-dimensional code image to the processor 92, and in this case, the processor 92 is further configured to parse the two-dimensional code image to obtain the URL corresponding to the to-be-accessed resource. The input device 93 herein may be a keyboard, a touchscreen, a posture recognition device, or any other device that can be used to input an instruction to the terminal. Near Field Communication includes a short-range communications standard, such as radio frequency identification (RFID), Bluetooth, and ZigBee. The image acquiring device 95 may be a device that is used to acquire an image, such as a camera or a scanner.

The detecting whether the stored domain name includes a domain name corresponding to the URL may specifically include: comparing characters in the URL one by one according to domain name information stored in a database and extracting a second-level domain name from the URL to obtain the domain name of the URL; or extracting a second-level domain name from the URL according to a delimiter in the URL to obtain the domain name of the ULR; and determining whether the terminal stores the domain name, where the domain name includes at least the second-level domain name.

Further, the triggering an application client corresponding to the domain name of the URL to acquire and display an application client page corresponding to the URL includes: starting the application client and sending the URL to the application client, so that the application client sends a request to a network server for acquiring the application client page corresponding to the URL and displays the application client page; or presenting the user with an identifier and/or an icon of the application client as one of options that can be used to open the to-be-accessed resource, and after the user selects the identifier and/or the icon of the application client, starting the application client and sending the URL to the application client, so that the application client sends a request to a network server for acquiring the application client page corresponding to the URL and displays the application client page.

Optionally, the processor 92 may further be configured to: determine whether the application client corresponding to the domain name of the URL is installed; and if the application client corresponding to the domain name of the URL is not installed, install the application client and store at least one domain name corresponding to the application client and the identifier and/or the icon of the application client.

Further, the determining whether the application client corresponding to the domain name of the URL is installed includes: performing matching between the domain name corresponding to the URL and a locally stored application client list; if the matching is successful, determining that the application client is installed on the terminal device; and if the matching is unsuccessful, determining that the application client is not installed on the terminal device.

Further, the processor 92 is further configured to send the domain name corresponding to the URL to a server, so that the server feeds back whether the application client corresponding to the application client exists; and the installing, by the terminal device, the application client specifically includes:
installing the application client corresponding to the domain name if the application client exists.

In the several embodiments provided in the present application, it should be understood that the disclosed device and method may be implemented in other manners. For example, the described device embodiments are merely exemplary. For example, the unit or module division is merely logical function division and may be other division in actual implementation. For example, a plurality of units or modules may be combined or integrated into another system, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, may be located in one position, or may be distributed on a plurality of network units. Some or all of the modules may be selected according to actual needs to achieve the objectives of the solutions of the embodiments.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A page operation processing method, comprising:
acquiring, by a terminal device, a uniform resource locator URL corresponding to a to-be-accessed resource;
detecting, by the terminal device, whether a stored domain name comprises a domain name corresponding to the URL; and
if the stored domain name comprises the domain name corresponding to the URL, triggering, by the terminal device, an application client corresponding to the domain name of the URL to acquire and display an application client page corresponding to the URL.

2. The method according to claim 1, wherein the acquiring, by a terminal device, a URL corresponding to a to-be-accessed resource comprises:
acquiring, by the terminal device, the URL that is corresponding to the to-be-accessed resource and is input by a user; or
acquiring, by the terminal device by scanning a two-dimensional code, the URL corresponding to the to-be-accessed resource; or
acquiring, by the terminal device from another device by using Near Field Communication, the URL corresponding to the to-be-accessed resource.

3. The method according to claim 1, wherein the detecting, by the terminal device, whether a stored domain name comprises a domain name corresponding to the URL comprises:
comparing, by the terminal device, characters in the URL one by one according to domain name information stored in a database and extracting a second-level domain name from the URL to obtain the domain name of the URL; or extracting a second-level domain name from the URL according to a delimiter in the URL to obtain the domain name of the URL; and
determining, by the terminal device, whether the terminal device stores the domain name, wherein:
the domain name comprises at least the second-level domain name.

4. The method according to claim 1, wherein the triggering, by the terminal device, an application client corresponding to the domain name of the URL to acquire and display an application client page corresponding to the URL comprises:
starting, by the terminal device, the application client and sending the URL to the application client, so that the application client sends a request to a network server for acquiring the application client page corresponding to the URL and displays the application client page; or
presenting, by the terminal device, a user with an identifier and/or an icon of the application client as one of options that can be used to open the to-be-accessed resource, and after the user selects the identifier and/or the icon of the application client, starting the application client and sending the URL to the application client, so that the application client sends a request to a network server for acquiring the application client page corresponding to the URL and displays the application client page.

5. The method according to any one of claims 1 to 4, wherein before the triggering, by the terminal device, an application client corresponding to the domain name of the URL to acquire and display an application client page corresponding to the URL, the method further comprises:
determining, by the terminal device, whether the application client corresponding to the domain name of the URL is installed; and
if the application client corresponding to the domain name of the URL is not installed, installing, by the terminal device, the application client and storing at least one domain name corresponding to the application client and the identifier and/or the icon of the application client.

6. The method according to claim 5, wherein the determining, by the terminal device, whether the application client corresponding to the domain name of the URL is installed comprises:
performing matching, by the terminal device, between the domain name corresponding to the URL and a locally stored application client list; if the matching is successful, determining that the application client is installed on the terminal device; and if the matching is unsuccessful, determining that the application client is not installed on the terminal device.

7. The method according to claim 6, wherein before the installing, by the terminal device, the application client, the method further comprises:
sending, by the terminal device, the domain name corresponding to the URL to a server, so that the server feeds back whether the application client corresponding to the domain name exists; and
the installing, by the terminal device, the application client specifically comprises:
installing, by the terminal device, the application client corresponding to the domain name if the application client exists.

8. A page operation processing apparatus, comprising:
an acquiring module, configured to acquire a uniform resource locator URL corresponding to a to-be-accessed resource;
a detecting module, configured to detect whether a stored domain name comprises a domain name corresponding to the URL; and
a processing module, configured to: if the detecting module detects that the stored domain name comprises the domain name corresponding to the URL, trigger an application client corresponding to the domain name of the URL to acquire and display an application client page corresponding to the URL.

9. The apparatus according to claim 8, wherein the acquiring module is specifically configured to:
acquire the URL that is corresponding to the to-be-accessed resource and is input by a user; or
acquire, by scanning a two-dimensional code, the URL corresponding to the to-be-accessed resource; or
acquire, from another device by using Near Field Communication, the URL corresponding to the to-be-accessed resource.

10. The apparatus according to claim 8, wherein the detecting module is specifically configured to:
compare characters in the URL one by one according to domain name information stored in a database and extract a second-level domain name from the URL to obtain the domain name of the URL; or extract a second-level domain name from the URL according to a delimiter in the URL to obtain the domain name of the URL; and determine whether the detecting module stores the domain name, wherein the domain name comprises at least the second-level domain name.

11. The apparatus according to claim 8, wherein the triggering an application client corresponding to the domain name of the URL to acquire and display an application client page corresponding to the URL comprises:
starting the application client and sending the URL to the application client, so that the application client sends a request to a network server for acquiring the application client page corresponding to the URL and displays the application client page; or
presenting a user with an identifier and/or an icon of the application client as one of options that can be used to open the to-be-accessed resource, and after the user selects the identifier and/or the icon of the application client, starting the application client and sending the URL to the application client, so that the application client sends a request to a network server for acquiring the application client page corresponding to the URL and displays the application client page.

12. The apparatus according to any one of claims 8 to 11, further comprising:
a determining module, configured to determine whether the application client corresponding to the domain name of the URL is installed, wherein:
the processing module is further configured to: if the application client is not installed, install the application client and store at least one domain name corresponding to the application client and the identifier and/or the icon of the application client.

13. The apparatus according to claim 12, wherein the determining module is specifically configured to: perform matching between the domain name corresponding to the URL and a locally stored application client list; if the matching is successful, determine that the application client is installed; and if the matching is unsuccessful, determine that the application client is not installed.

14. The apparatus according to claim 13, wherein the processing module is further configured to:
send the domain name corresponding to the URL to a server, so that the server feeds back whether the application client corresponding to the domain name exists; and
the installing, by the terminal device, the application client specifically comprises:
installing the application client corresponding to the domain name if the application client exists.

15. A terminal, comprising:
a memory, configured to store a domain name corresponding to an application client installed on the terminal; and
a processor, configured to: acquire a uniform resource locator URL corresponding to a to-be-accessed resource; detect whether the stored domain name comprises a domain name corresponding to the URL; and if it is detected that the stored domain name comprises the domain name corresponding to the URL, trigger an application client corresponding to the domain name of the URL to acquire and display an application client page corresponding to the URL.

16. The terminal according to claim 15, further comprising:
an input device, configured to receive the URL that is corresponding to the to-be-accessed resource and is input by a user and send the URL to the processor; or
a Near Field Communication receiver, configured to receive the URL corresponding to the to-be-accessed resource by using Near Field Communication and send the URL to the processor.

17. The terminal according to claim 15 or 16, further comprising:
an image acquiring device, configured to acquire a two-dimensional code image and send the two-dimensional code image to the processor, wherein:
the processor is further configured to parse the two-dimensional code image to obtain the URL corresponding to the to-be-accessed resource.

18. The terminal according to claim 15, wherein the detecting whether the stored domain name comprises a domain name corresponding to the URL specifically comprises:
comparing characters in the URL one by one according to a domain name stored in a database and extracting a second-level domain name from the URL to obtain the domain name of the URL; or extracting a second-level domain name from the URL according to a delimiter in the URL to obtain the domain name of the URL; and
determining whether the terminal stores the domain name, wherein:
the domain name comprises at least the second-level domain name.

19. The terminal according to claim 15, wherein the triggering an application client corresponding to the domain name of the URL to acquire and display an application client page corresponding to the URL comprises:
starting the application client and sending the URL to the application client, so that the application client sends a request to a network server for acquiring the application client page corresponding to the URL and displays the application client page; or
presenting a user with an identifier and/or an icon of the application client as one of options that can be used to open the to-be-accessed resource, and after the user selects the identifier and/or the icon of the application client, starting the application client and sending the URL to the application client, so that the application client sends a request to a network server for acquiring the application client page corresponding to the URL and displays the application client page.

20. The terminal according to any one of claims 15 to 19, wherein the processor is further configured to: determine whether the application client corresponding to the domain name of the URL is installed; and if the application client corresponding to the domain name of the URL is not installed, install the application client and store at least one domain name corresponding to the application client and the identifier and/or the icon of the application client.

21. The terminal according to claim 20, wherein the determining whether the application client corresponding to the domain name of the URL is installed comprises: performing matching between the domain name corresponding to the URL and a locally stored application client list; if the matching is successful, determining that the application client is installed on the terminal device; and if the matching is unsuccessful, determining that the application client is not installed on the terminal device.

22. The terminal according to claim 21, wherein:
the processor is further configured to send the domain name corresponding to the URL to a server, so that the server feeds back whether the application client corresponding to the domain name exists; and
the installing, by the terminal device, the application client specifically comprises:
installing the application client corresponding to the domain name if the application client exists.
